# EUROPÄISCHE PATENTANMELDUNG

(11) **EP 1 094 584 A2**
(43) Veröffentlichungstag der Anmeldung: **25.04.2001**
(21) Anmeldenummer: 00119745.8
(22) Anmeldetag: 09.09.2000
(51) Int. Cl.: H02G 11/00, D06F 81/00

(54) **Kabelhaltevorrichtung**

(30) Priorität: 22.10.1999 DE 29918638 U
(71) Anmelder: Alfred Kärcher GmbH & Co., 71364 Winnenden (DE)
(72) Erfinder: Nonnemann, Frank, DE-73614 Schorndorf (DE)
(74) Vertreter: Hoeger, Stellrecht & Partner

(57) **Zusammenfassung**

Um eine Kabelhaltevorrichtung für ein Stromkabel eines Bügeleisens mit einer Halteaufnahme für das Stromkabel, wobei die Kabelhaltevorrichtung bezüglich einer Bügelauflage positionierbar ist, zu schaffen, welche universell einsetzbar ist und insbesondere eine freie Bewegung eines Bügeleisens im Bügelbereich erlaubt, wird vorgeschlagen, daß eine weitere Halteaufnahme für einen Fluidzuführungsschlauch zur Zuführung von Wasser oder Dampf zum Bügeleisen vorgesehen ist.

## Beschreibung

Die Erfindung betrifft eine Kabelhaltevorrichtung für ein Stromkabel eines Bügeleisens mit einer Halteaufnahme für das Stromkabel, wobei die Kabelhaltevorrichtung bezüglich einer Bügelauflage positionierbar ist.

Derartige Kabelhaltevorrichtungen sind aus der EP 0 278 097 B1 und der DE 90 17 364 U1 bekannt.

Es ist Aufgabe der Erfindung, eine solche Haltevorrichtung zu schaffen, welche universell einsetzbar ist und insbesondere eine freie Bewegung eines Bügeleisens im Bügelbereich erlaubt.

Diese Aufgabe wird bei einer Kabelhaltevorrichtung der eingangs genannten Art erfindungsgemäß gelöst durch eine weitere Halteaufnahme für einen Fluidzuführungsschlauch zur Zuführung von Wasser oder Dampf zum Bügeleisen.

Durch das erfindungsgemäße Vorsehen einer weiteren Halteaufnahme läßt sich die erfindungsgemäße Kabelhaltevorrichtung auch bei Dampfbügeleisen einsetzen, die über einen Fluidzuführungsschlauch mit Wasser oder Dampf versorgt werden. Dadurch ist mit einer einzigen Kabelhaltevorrichtung der Bügelbereich sowohl von dem Stromkabel als auch von dem Fluidzuführungsschlauch freihaltbar. Durch gleichzeitig an der Kabelhaltevorrichtung vorgesehene zwei Halteaufnahmen, nämlich einer für das Stromkabel und einer weiteren für den Fluidzuführungsschlauch, lassen sich auf einfache Weise die Längenabschnitte der beiden Leitungen zwischen dem Bügeleisen und der Kabelhaltevorrichtung einstellen, um einerseits den gewünschten Bewegungsspielraum zu erhalten und andererseits ein Schleifen des Stromkabels und/oder des Fluidzuführungsschlauches auf den Boden während Bügelbewegungen zu vermeiden.

Besonders vorteilhaft ist es, wenn die Halteaufnahme für das Stromkabel und die weitere Halteaufnahme für den Fluidzuführungsschlauch im wesentlichen parallel zueinander angeordnet sind. Dadurch läßt sich zum einen die Kabelhaltevorrichtung auf einfache Weise herstellen und andererseits läßt sich das Einführen von Stromkabel und Fluidzuführungsschlauch in die jeweils vorgesehenen Halteaufnahmen auf einfache Weise bewerkstelligen.

Günstigerweise weisen die Halteaufnahme für das Stromkabel und die weitere Halteaufnahme für den Fluidzuführungsschlauch im wesentlichen den gleichen Querschnitt auf. Dadurch läßt sich die Kabelhaltevorrichtung auf einfache Weise fertigen, da keine unterschiedlichen Querschnitte der Halteaufnahme berücksichtigt werden müssen. Zum anderen muß ein Benutzer dann auch nicht darauf achten, welches Kabel er in welche Halteaufnahme einzuführen hat, da beide Halteaufnahmen gleichberechtigt sind und eine bestimmte Haltevorrichtung ein Stromkabel oder einen Fluidzuführungsschlauch aufnehmen kann.

Ganz besonders vorteilhaft ist es, wenn die Kabelhaltevorrichtung als Klemmvorrichtung ausgebildet ist. Dadurch werden die Leitungen (Stromkabel und Fluidzuführungsschlauch) in der Kabelhaltevorrichtung automatisch mittels Klemmkraft gehalten, ohne daß beispielsweise eine formschlüssige Verbindung zwischen Kabelhaltevorrichtungsteilen hergestellt werden muß. Dies ermöglicht einen schnellen Einsatz und die Leitungen lassen sich entsprechend auch wieder einfach aus der erfindungsgemäßen Kabelhaltevorrichtung entfernen.

Konstruktiv besonders einfach ist es, wenn die Kabelhaltevorrichtung einen ersten Klemmbügel und einen zweiten Klemmbügel umfaßt, zwischen welchen die Halteaufnahmen gebildet sind. Zwischen den Klemmbügeln lassen sich dann das Stromkabel und der Fluidzuführungsschlauch einklemmen, wobei die beiden Klemmbügel auf die Leitungen eine Klemmkraft ausüben, die die Leitungen hält. Durch relative Auseinanderbewegung der beiden Klemmbügel lassen sich die Leitungen entnehmen.

Fertigungstechnisch besonders einfach ist es, wenn ein Klemmbügel eine Ausnehmung zur Bildung der Halteaufnahme für das Stromkabel und eine weitere Ausnehmung zur Bildung der weiteren Halteaufnahme für den Fluidzuführungsschlauch umfaßt. Derartige Klemmbügel lassen sich beispielsweise auf einfache Weise mittels eines Spritzgießverfahrens herstellen.

Ganz besonders vorteilhaft ist es, wenn die Klemmbügel derart angeordnet und ausgebildet sind, daß sie relativ zueinander so weit beweglich sind, daß das Stromkabel und der Fluidzuführungsschlauch in die entsprechenden Halteaufnahmen einführbar sind bzw. von dort herausnehmbar sind. Dadurch wird ermöglicht, daß ein Kabel über seine Längsseite einführbar bzw. entnehmbar ist und insbesondere nicht mittels eines Kabelendes in die Halteaufnahmen eingeführt werden muß.

Grundsätzlich kann die relative Beweglichkeit der beiden Klemmbügel durch eine entsprechende Lagerung dieser beiden Klemmbügel erreicht werden. Fertigungstechnisch besonders günstig und insbesondere besonders kostengünstig ist es aber, wenn die Klemmbügel aus einem elastischen Material gefertigt sind. Durch die Elastizität des Materials läßt sich die geforderte Beweglichkeit erreichen, so daß einerseits das Stromkabel und der Fluidzuführungsschlauch klemmend haltbar sind und andererseits auf einfache Weise in die Kabelhaltevorrichtung einführbar bzw. aus dieser entnehmbar sind.

Um das Einführen der Leitungen zu vereinfachen, ist günstigerweise die Kabelhaltevorrichtung an einem Einführende für das Stromkabel bzw. für den Fluidzuführungsschlauch den Halteaufnahmen zugewandt trichterförmig ausgebildet. Durch entsprechende Ausübung einer Zugkraft auf eine Leitungslängsseite in Richtung auf die Halteaufnahmen zu lassen sich die Klemmbügel derart relativ zueinander bewegen, d.h. elastisch deformieren, daß die entsprechende Leitung in die Halteaufnahme gelangt und dort klemmend gehalten wird.

Bei einer Variante einer Ausführungsform ist es vorgesehen, daß eine Halteaufnahme im wesentlichen parallel zu einer Klemmbügelebene angeordnet ist. Dadurch läßt sich über den in einer Halteaufnahme liegenden Umfang einer Leitung (Stromkabel und/oder Fluidzuführungsschlauch) gleichmäßig eine Klemmkraft ausüben.

Ganz besonders vorteilhaft ist es, wenn die Haltevorrichtung einstückig ausgebildet ist. Sie läßt sich dann auf einfache und kostengünstige Weise herstellen und ist auf einfache Weise einsetzbar und wenig anfällig gegenüber Verschleiß. Insbesondere läßt sich die gesamte erfindungsgemäße Kabelhaltevorrichtung dann mittels eines Spritzgießverfahrens herstellen und damit kostengünstig mit großer Stückzahl herstellen.

Um die erfindungsgemäße Kabelhaltevorrichtung auf einfache Weise mit einer Haltestange zu verbinden, welche beispielsweise an einem Bügelbrett gehalten ist, weist günstigerweise die Kabelhaltevorrichtung eine Ausnehmung zum Aufsetzen auf die Haltestange auf. Sie läßt sich dann bei entsprechender Anpassung der Ausnehmung und eines Einführendes der Haltestange auf einfache Weise auf dieser aufsetzen. Insbesondere lassen sich dadurch auch Kabelhaltevorrichtungen austauschen und beispielsweise die erfindungsgemäße Kabelhaltevorrichtung mit bereits vorhandenen Bügelstationen verwenden.

Die nachfolgende Beschreibung einer bevorzugten Ausführungsform der Erfindung dient im Zusammenhang mit der Zeichnung der näheren Erläuterung.
Es zeigen:
- Fig. 1: Eine perspektivische Ansicht eines Bügelbretts mit einem Bügeleisen und an dem Bügelbrett gehaltener erfindungsgemäßer Kabelhaltevorrichtung;
- Fig. 2: eine vergrößerte perspektivische Ansicht der Kabelhaltevorrichtung gemäß Fig. 1 (dortiger Bereich A);
- Fig. 3: eine vordere Draufsicht auf die Kabelhaltevorrichtung gemäß Fig. 2 und
- Fig. 4: eine seitliche Draufsicht auf die Kabelhaltevorrichtung gemäß Fig. 2.

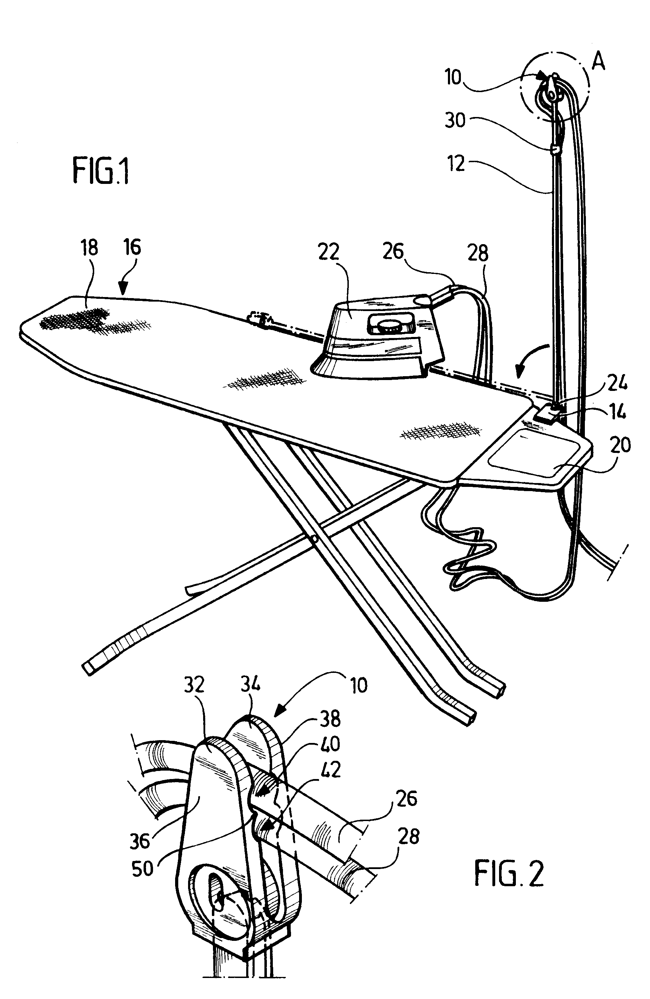

Eine Kabelhaltevorrichtung, welche in Fig. 1 als Ganzes mit 10 bezeichnet ist, sitzt bei dem gezeigten Ausführungsbeispiel an einer Haltestange 12, welche mittels einer Halterung 14 mit einem Bügeltisch 16 verbunden ist. Dieser Bügeltisch 16 umfaßt eine Bügelauflage 18 und eine Ablage 20 für ein Bügeleisen 22, wobei bei dem gezeigten Ausführungsbeispiel die Halterung 14 mit dieser Ablage 20 verbunden ist. Die Halterung 14 und die Haltestange 12 sind bevorzugterweise über ein Schwenklager 24 verbunden, mittels welchem sich die Haltestange 12 in Richtung der Bügelauflage 18 schwenken läßt, um den Bügeltisch 16 platzsparend aufbewahren zu können.

Es kann auch vorgesehen sein, daß die Kabelhaltevorrichtung beispielsweise an einer Wand befestigt ist (in der Zeichnung nicht gezeigt).

Das Bügeleisen 22 ist ein Dampfbügeleisen, welches über ein Stromkabel 26 mit elektrischer Leistung versorgt wird und dem über eine Fluidzuführungsleitung 28 ein Fluid für das Dampfbügeln zugeführt wird. Bei dem Fluid handelt es sich insbesondere um Dampf, der in einem in der Zeichnung nicht gezeigten Druckbehälter erzeugt wird. Dieser Druckbehälter kann am Bügeltisch 16 angeordnet sein, insbesondere unterhalb der Ablage 20 oder außerhalb des Bügeltisches 16. Das Stromkabel 26 ist an seinem in Fig. 1 nicht gezeigten Ende mit einem Stecker versehen. Es kann vorgesehen sein, daß an dem Bügeltisch 16 und insbesondere an der Ablage 20 eine Steckdose zur Stromversorgung des Bügeleisens 22 angeordnet ist.

Sowohl das Stromkabel 26 als auch das Fluidzuführungskabel 28 sind durch die erfindungsgemäße Kabelhaltevorrichtung 10 geführt, welche über die Haltestange 12 in einem vertikalen Abstand zur Bügelauflage 18 außerhalb und insbesondere oberhalb des Bügelbereichs positioniert ist. Durch entsprechende Einstellung der Länge eines Abschnittes des Stromkabels 26 als auch der Länge eines Abschnittes der Fluidzuführungsleitung zwischen dem Bügeleisen 22 und der Kabelhaltevorrichtung 10 läßt sich einerseits erreichen, daß das Bügeleisen 22 frei im Bügelbereich beweglich ist, ohne daß beispielsweise das Stromkabel 26 oder der Fluidzuführungsschlauch 28 bei der Bewegung des Bügeleisens 22 auf dem Boden geschleift werden und andererseits das Bügeleisen 22 im gesamten Bügelbereich auf der Bügelauflage 18 frei beweglich ist. Vorzugsweise ist die Haltestange 12 auch derart elastisch angeordnet oder ausgebildet, daß sie im gewissen Maße bei Zug nachgibt, um den Bewegungsbereich des Bügeleisens 22 zu vergrößern. Das durch die Kabelhaltevorrichtung 10 geführte Stromkabel 26 und der Fluidzuführungsschlauch 28 können beispielsweise über ein oder mehrere Halteclips 30 an der Haltestange 12 gehalten werden, so daß diese nicht einfach von der Kabelhaltevorrichtung 10 herunterhängen, sondern an der Haltestange 12 nach unten geführt sind. Es können auch mehrere Halteclips 30 vorgesehen sein und insbesondere jeweils Halteclips für das Stromkabel 26 und den Fluidzuführungsschlauch 28.

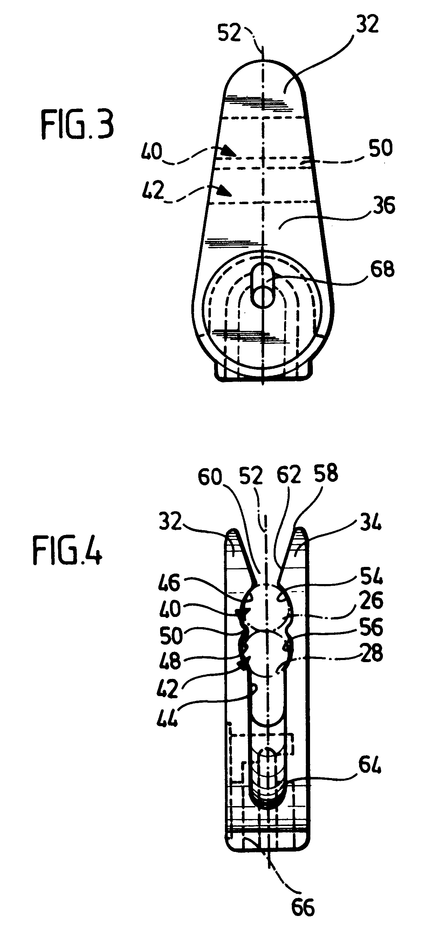

Die Kabelhaltevorrichtung ist, wie in Fig. 2 gezeigt, als Klemmvorrichtung mit einem ersten Klemmbügel 32 und einem gegenüberliegenden zweiten Klemmbügel 34 ausgebildet. Die beiden Klemmbügel 32 und 34 weisen bei der gezeigten Ausführungsform jeweils im wesentlichen plane gegenüberliegende Außenflächen 36 und 38 auf. Die Außenfläche 36 des ersten Klemmbügels 32 und die Außenfläche 38 des zweiten Klemmbügels 34 sind im wesentlichen parallel zueinander. Die Klemmbügel 32, 34 haben die Form eines langgezogenen Dreiecks mit abgerundeten Spitzen (Fig. 3).

Zwischen dem ersten Klemmbügel 32 und dem zweiten Klemmbügel 34 ist eine Halteaufnahme 40 für das Stromkabel 26, in welche dieses zwischen die beiden Klemmbügel 32 und 34 einklemmbar ist, und eine weitere Halteaufnahme 40 für den Fluidzuführungsschlauch 28 gebildet, in welche dieser einklemmbar ist. Dazu umfaßt eine Innenfläche 44 des ersten Klemmbügels 32, d.h. eine dem zweiten Klemmbügel 34 zugewandte Fläche eine bogenförmige Ausnehmung 46 zur Bildung der Halteaufnahme 40 für das Stromkabel 26 und in einem Abstand zu dieser Ausnehmung 46 angeordnet eine weitere bogenförmige Ausnehmung 48, mittels welcher die weitere Halteaufnahme 42 für den Fluidzuführungsschlauch 28 gebildet ist. Im ersten Klemmbügel 32 ist zwischen den beiden Ausnehmungen 46 und 48 ein Steg 50 zur Trennung der beiden Halteaufnahmen 40 und 42 senkrecht zu einer Achse 52 (Fig. 3, Fig. 4) der Kabelhaltevorrichtung 10 angeordnet.

Der zweite Klemmbügel 34 weist den Ausnehmungen 46 und 48 entsprechende Ausnehmungen 54 und 56 auf, welche den genannten Ausnehmungen 46 und 48 im ersten Klemmbügel 32 gegenüberliegen.

Die Halteaufnahme 40 und die weitere Halteaufnahme 42 sind im wesentlichen parallel zueinander und im wesentlichen senkrecht zur Achse 52 der Kabelhaltevorrichtung 10 (Fig. 3) und im wesentlichen parallel zu den Außenflächen 36, 38 der beiden Klemmbügel 32 und 34 orientiert.

An einem Einführende 58 (Fig. 4) sind der erste Klemmbügel 32 und der zweite Klemmbügel 34 derart abgeschrägt, daß das Einführende 58 trichterförmig ausgebildet ist mit einer "Trichteröffnung" 60, welche den beiden Halteaufnahmen 40 und 42 zugewandt ist. Dazu ist die Innenfläche 44 des ersten Klemmbügels 32 und die entsprechende Innenfläche des zweiten Klemmbügels 34 an dem Einführende 58 derart ausgebildet, daß sie einen spitzen Winkel zu der Achse 52 aufweist (Fig. 4). Auf die derartig ausgebildete Innenfläche 62 an dem Einfuhrende 58 folgt auf dem ersten Klemmbügel 32 die Ausnehmung 46 und am zweiten Klemmbügel 34 die Ausnehmung 54 zur Bildung der Halteaufnahme 40.

Der erste Klemmbügel 32 und der zweite Klemmbügel 34 sitzen an einem Haltekörper 64 derart, daß zwischen den Innenflächen 44 ein entsprechender Abstand gebildet ist, um die Halteaufnahmen 40 und 42 bereitzustellen. Insbesondere sind die beiden Klemmbügel 32 und 34 einstückig mit dem Haltekörper 64 gebildet. Dadurch umfaßt die erfindungsgemäße Kabelhaltevorrichtung 10 im wesentlichen nur eine Komponente.

In dem Haltekörper 64 ist eine Ausnehmung 66 gebildet, mittels welcher die Kabelhaltevorrichtung 10 auf die Haltestange 12 aufsetzbar ist und insbesondere in welche das entsprechende Ende der Haltestange 12 einführbar ist. Diese Ausnehmung 66 und das Ende der Haltestange 12 können so aufeinander abgestimmt sein, daß die Kabelhaltevorrichtung 10 auf der Haltestange 12 mittels eines Klemmsitzes positionierbar ist. Es kann alternativ oder auch zusätzlich vorgesehen sein, daß ein Haltestift oder eine Halteschraube über eine entsprechende Öffnung 68 in dem ersten Klemmbügel 32 oder dem zweiten Klemmbügel 34 zur Fixierung der Kabelhaltevorrichtung 10 an der Haltestange 12 einführbar ist.

Die erfindungsgemäße Kabelhaltevorrichtung 10 läßt sich auf einfache Weise aus einem Kunststoffmaterial mittels eines Spritzgießverfahrens herstellen.

Das Material mit seinen elastischen Eigenschaften für die Kabelhaltevorrichtung 10 ist derart gewählt, daß der erste Klemmbügel 32 und der zweite Klemmbügel 34 relativ zueinander derart beweglich sind, daß das Stromkabel 26 und der Fluidzuführungsschlauch 28 in die zugeordneten Halteaufnahmen 40 und 42 über das Einführende 58 einführbar sind und dort mittels der über die beiden Klemmbügel 32 und 34 relativ zueinander ausgeübten Klemmkraft gehalten sind.

Die erfindungsgemäße Kabelhaltevorrichtung 10 funktioniert wie folgt:

Die Kabelhaltevorrichtung 10 wird, wie oben beschrieben, in einem vertikalen Abstand zu einer Bügelauflage 18 positioniert. In der jeweils zwischen der Kabelhaltevorrichtung 10 und dem Bügeleisen 22 erforderlichen Länge wird der Fluidzuführungsschlauch 28 über das Einführende 58 eingeführt und in der weiteren Halteaufnahme 42 eingeklemmt. Das Stromkabel 26 wird eingeführt und in die Halteaufnahme 40 eingeklemmt. Das Ende des Stromkabels 26 wird mit einer Stromversorgung verbunden, das Ende des Fluidzuführungsschlauches 28 wird mit einer Fluidversorgung, beispielsweise einem Dampfgenerator verbunden.

Beim Bügeln mittels des Bügeleisens 22 auf der Bügelauflage 18 ist dann dafür gesorgt, daß das Bügeleisen 22 im Bügelbereich frei beweglich ist, ohne daß das Stromkabel 26 oder der Fluidzuführungsschlauch 28 in den Bügelbereich geraten. Weiterhin ist auch dafür gesorgt, daß bei entsprechender Einstellung der Längenabschnitte des Stromkabels 26 und des Fluidzuführungsschlauches 28 beim Bewegen des Bügeleisens 22 diese Zuleitungen nicht auf dem Boden geschleift werden.

## Patentansprüche

1. Kabelhaltevorrichtung für ein Stromkabel (26) eines Bügeleisens (22) mit einer Halteaufnahme (40) für das Stromkabel (26), wobei die Kabelhaltevorrichtung (10) bezüglich einer Bügelauflage (18) positionierbar ist,
**gekennzeichnet** durch eine weitere Halteaufnahme (42) für einen Fluidzuführungsschlauch (28) zur Zuführung von Wasser oder Dampf zum Bügeleisen (22).

2. Kabelhaltevorrichtung nach Anspruch 1, dadurch gekennzeichnet, daß die Halteaufnahme (40) für das Stromkabel (26) und die weitere Halteaufnahme (42) für den Fluidzuführungsschlauch (28) im wesentlichen parallel zueinander angeordnet sind.

3. Kabelhaltevorrichtung nach Anspruch 1 oder 2, dadurch gekennzeichnet, daß die Halteaufnahme (40) für das Stromkabel (26) und die weitere Halteaufnahme (42) für den Fluidzuführungsschlauch (28) im wesentlichen den gleichen Querschnitt aufweisen.

4. Kabelhaltevorrichtung nach einem der vorangehenden Ansprüche, dadurch gekennzeichnet, daß die Kabelhaltevorrichtung (10) als Klemmvorrichtung ausgebildet ist.

5. Kabelhaltevorrichtung nach einem der vorangehenden Ansprüche, dadurch gekennzeichnet, daß die Kabelhaltevorrichtung (10) einen ersten Klemmbügel (32) und einen zweiten Klemmbügel (34) umfaßt, zwischen welchen die Halteaufnahmen (40, 42) gebildet sind.

6. Kabelhaltevorrichtung nach Anspruch 5, dadurch gekennzeichnet, daß ein Klemmbügel (33; 34) eine Ausnehmung (46; 54) zur Bildung der Halteaufnahme (40) für das Stromkabel (26) und eine weitere Ausnehmung (48; 56) zur Bildung der weiteren Halteaufnahme (42) für den Fluidzuführungsschlauch (28) umfaßt.

7. Kabelhaltevorrichtung nach Anspruch 5 oder 6, dadurch gekennzeichnet, daß die Klemmbügel (32, 34) derart angeordnet und ausgebildet sind, daß sie relativ zueinander so weit beweglich sind, daß das Stromkabel (26) und der Fluidzuführungsschlauch (28) in die entsprechenden Halteaufnahmen (40, 42) einführbar sind bzw. von dort herausnehmbar sind.

8. Kabelhaltevorrichtung nach Anspruch 7, dadurch gekennzeichnet, daß die Klemmbügel (32, 34) aus einem elastischen Material gefertigt sind.

9. Kabelhaltevorrichtung nach einem der vorangehenden Ansprüche, dadurch gekennzeichnet, daß die Kabelhaltevorrichtung (10) an einem Einführende (58) für das Stromkabel (26) bzw. für den Fluidzuführungsschlauch (28) den Halteaufnahmen (40; 42) zugewandt trichterförmig ausgebildet ist.

10. Kabelhaltevorrichtung nach einem der Ansprüche 5 bis 9, dadurch gekennzeichnet, daß eine Halteaufnahme (40; 42) im wesentlichen parallel zu einer Klemmbügelebene (36, 38) angeordnet ist.

11. Kabelhaltevorrichtung nach einem der vorangehenden Ansprüche, dadurch gekennzeichnet, daß die Kabelhaltevorrichtung einstückig ausgebildet ist.

12. Kabelhaltevorrichtung nach einem der vorangehenden Ansprüche, dadurch gekennzeichnet, daß die Kabelhaltevorrichtung mittels eines Spritzgießverfahrens herstellbar ist.

13. Kabelhaltevorrichtung nach einem der vorangehenden Ansprüche, gekennzeichnet durch eine Ausnehmung (66) zum Aufsetzen der Kabelhaltevorrichtung auf eine Haltestange (12).
